# EUROPEAN PATENT APPLICATION

(11) **EP 1 745 692 A1**
(43) Date of publication of application: **24.01.2007**
(21) Application number: 06011051.7
(22) Date of filing: 30.05.2006
(51) Int. Cl.: A01G 25/16

(54) **Watering control system for gardens and farm land**

(30) Priority: 20.07.2005 ES 200501767
(71) Applicant: Aguilella Ferrer, Javier, 46117 Betera , Valencia (ES)
(72) Inventor: Aguilella Ferrer, Javier, 46117 Betera , Valencia (ES)
(74) Representative: Isern-Jara, Nuria

(57) **Abstract**

A remotely controlled watering control system for gardens and farm land of the present invention that includes a means of gathering climatological data fitted on the gardens and farm land to be watered, a means of controlling the mechanical devices for the carrying out of the watering operations, said means of control being governed by a central server microcontroller, which carries out the management of the system, allowing the modification of the system parameters programmed in the microcontroller server by means of information messages sent by the users using a mobile telephone with working orders for the control device and through climatological data information from the gardens or farm land in real time.

## Description

### OBJECT OF THE INVENTION

The object of this invention is a watering control system for gardens and farm land that incorporates significant innovations and advantages compared to the current known watering systems.

More specifically it refers to a watering control system for gardens and farm land remotely controlled with the aid of computer means that allows the optimum advantage to be taken of the water.

### BACKGROUND TO THE INVENTION

At the present time automated control of small plots of land aimed at garden areas or equally farm land for the watering can be carried out by means of controllers that are manually programmed in a localised manner by the users or owners. In addition watering systems are known in the present state of the technique that can be controlled from a computer control point connected to different watering points, for example, the systems that are described in the invention patents N° ES 2 155 801 and N° ES 2 115 556.

Said watering systems work by means of a central computer that sends signals to different remote controllers for the purpose of carrying out the different watering operations in accordance with the information stored in the computer.

However, said systems are not designed to modify the parameters contained and established in the computer or central server from the receipt of a message sent by the user or owner of the land by means of the use of mobile telephones and bidirectional connections.

### DESCRIPTION OF THE INVENTION

This present invention has been developed for the purpose of providing a watering system that solves the previously stated disadvantages, moreover, in addition to providing other advantages that will be clear from the description which is attached below.

The remotely controlled watering control system for gardens and farm land of the present invention is basically characterised in that it includes a means of gathering climatological data via a device fitted on the gardens and farm land to be watered, a means of controlling the mechanical devices for the carrying out of the watering operations, said means of control being governed by a central server microcontroller using a computer programme, which carries out the management of the system, allowing the modification of the system parameters programmed in the microcontroller server by means of information messages sent by the users using a mobile telephone with working orders for the control device and through climatological data information from the gardens or farm land in real time.

Thanks to these characteristics an improved watering control system is achieved that allows the users of an automated and remotely controlled watering system to modify certain parameters from a simple mobile telephone via the use of SMS messaging. In this way, in the event of a high rainfall, the user can send a message to the system to state a reduced amount of water for the irrigation or even numerically state the exact amount of litres of water to be given. The system here described allows watering outlets to work independently at the same time without interfering between them.

In accordance with another aspect of the invention, there is a bidirectional transfer of information between the central server microcontroller and the user, in such a way that the user can send information messages and subsequently the central server microcontroller can send a signal by means of an information message in regard to the receipt of the message sent by the user.

Other characteristics and advantages of the watering system object of the present invention will become clear from the description of a preferred embodiment, but this is not exclusive.

### DESCRIPTION OF A PREFERRED EMBODIMENT

The control system of the volume of the watering for land, such as for remotely controlled public or private gardens, and farm or forestry land allows the watering to be controlled from the volumetric point of view by means of an impulse counter and by means of time measurement.

The control system basically includes a means of gathering climatological data (humidity, temperature, etc.) fitted on the gardens or farm land to be watered, a means of controlling the mechanical devices (such as pumps, cutoff valves, sluice gates, etc.) for the carrying out of the watering operations, said means of control being governed by a central server microcontroller that carries out the management of the system by means of software, allowing the system to modify the parameters programmed into the microcontroller server by means of information messages (known as SMS) sent by users via a mobile telephone in the form of working orders for the control means and by way of information on the climatological data from the gardens or farm land in real time. In this way the user has the possibility of modifying the volume of water to be received in the watering of the land.

It must be highlighted that there is a bidirectional transfer of information between the central server microcontroller and the user, in such a way that the user can send information messages and subsequently the central server microcontroller sends a signal by way of an information message in regard to the receipt of the message sent by the user to confirm receipt and the start up of the new instructions.

It must be mentioned that the system here described allows the introduction of home automation control.

The details, shapes, sizes and other accessorial elements, likewise the materials used for the construction of the watering system of the invention can suitably be substituted for others that are technically equivalent and do not deviate from the essentials of the invention or the scope defined by the claims which are included below.

## Claims

1. A remotely controlled watering control system for gardens and farm land of the present invention, **characterised in that** it includes a means of gathering climatological data fitted on the gardens and farm land to be watered, a means of controlling the mechanical devices for the carrying out of the watering operations, said means of control being governed by a central server microcontroller, which carries out the management of the system, allowing the modification of the system parameters programmed in the microcontroller server by means of information messages sent by the users using a mobile telephone with working orders for the control device and through climatological data information from the gardens or farm land in real time.

2. Watering control system for gardens and farm land according to Claim 1, **characterised in that** there is a bidirectional transfer of information between the central server microcontroller and the user, in such a way that the user can send information messages and subsequently the central server computer sends a signal by way of an information message confirming receipt of the message sent by the user.
